# FASCICULE DE BREVET EUROPEEN

(11) **EP 1 474 474 B1**
(45) Date de publication et mention de la délivrance du brevet: **18.07.2007**
(21) Numéro de dépôt: 03706430.0
(22) Date de dépôt: 05.02.2003
(51) Int. Cl.: C08K 5/3415, B60C 1/00

(54) **BANDE DE ROULEMENT POUR PNEUMATIQUE**
LAUFFLÄCHE FÜR REIFEN
RUNNING TREAD FOR TYRE

(30) Priorité: 07.02.2002 FR 0201659
(43) Date de publication de la demande: 10.11.2004
(73) Titulaire: Société de Technologie Michelin, 63000 Clermont-Ferrand (FR); MICHELIN Recherche et Technique S.A., 1763 Granges-Paccot (CH)
(72) Inventeur: VASSEUR, Didier, F-63100 Clermont-Ferrand (FR)
(74) Mandataire: Ribière, Joel
(86) Numéro de dépôt international: PCT/EP2003/001126
(87) Numéro de publication internationale: WO 2003/066722

(56) Documents cités:
- EP-A- 1 199 331
- WO-A-00/05300
- WO-A-95/34601
- WO-A-99/06480

## Description

La présente invention est relative aux bandes de roulement des pneumatiques et aux compositions de caoutchouc utilisées pour la fabrication de telles bandes de roulement.

Elle se rapporte plus particulièrement aux bandes de roulement des pneumatiques à faible résistance au roulement, renforcées majoritairement de charges inorganiques, ces bandes de roulement étant destinées en particulier à des pneumatiques équipant des véhicules tels que motos, voitures de tourisme, camionnettes ou Poids-lourd.

Depuis que les économies de carburant et la nécessité de protéger l'environnement sont devenues une priorité, il s'est avéré nécessaire de produire des pneumatiques ayant à la fois une résistance au roulement réduite et une résistance élevée à l'usure. Ceci a été rendu possible grâce notamment à la découverte de nouvelles compositions de caoutchouc renforcées de charges inorganiques spécifiques qualifiées de "renforçantes", capables de rivaliser, du point de vue renforçant, avec le noir de carbone conventionnel et offrant en outre à ces compositions une faible hystérèse, synonyme d'une plus basse résistance au roulement pour les bandes de roulement de pneumatiques les comportant. De telles compositions à base de charges inorganiques renforçantes du type siliceuses ou alumineuses ont par exemple été décrites dans les brevets ou demandes de brevet EP-A-0 501 227, EP-A-0 735 088, EP-A-0 810 258, EP-A-0 881 252, WO99/02590, WO99/02601, WO99/02602, WO99/28376, WO00/05300, WO00/05301, WO 01/96442, WO 02/30939, WO 02/31041, WO 02/083782:

Mais, idéalement, une bande de roulement de pneumatique doit obéir à d'autres exigences techniques, pour certaines antinomiques, posséder en particulier une adhérence élevée tant sur sol sec que sur sol mouillé, enneigé ou verglacé, tout en offrant au pneumatique un très bon niveau de comportement routier (*"handling"*) sur véhicule automobile, en particulier une poussée de dérive (*"drift thrust"* ou *"cornering")* élevée.

Pour améliorer le comportement routier, on le sait, une rigidité supérieure de la bande de roulement est souhaitable, cette rigidification pouvant être obtenue par exemple en augmentant le taux de charge renforçante ou en incorporant certaines résines renforçantes dans les compositions de caoutchouc constitutives de ces bandes de roulement.

Toutefois, une telle rigidification de la bande de roulement, tout au moins pour sa partie superficielle qui est au contact du sol lors du roulage du pneumatique, pénalise de manière connue, le plus souvent de manière rédhibitoire, les propriétés d'adhérence sur un sol mouillé, enneigé ou verglacé.

C'est la raison pour laquelle, pour satisfaire à ces deux exigences contradictoires que sont comportement routier et adhérence, on a essentiellement proposé jusqu'ici d'utiliser des bandes de roulement composites (i.e., hybrides), formées par deux couches radialement superposées (*"cap-base structure*") de rigidités différentes, constituées de deux compositions de caoutchouc de formulations différentes : la couche radialement externe, au contact de la route, est constituée de là composition la plus souple, pour satisfaire aux exigences d'adhérence ; la couche radialement interne est constituée de la composition la plus rigide, pour satisfaire aux exigences de comportement routier.

Une telle solution présente toutefois de nombreux inconvénients :
- tout d'abord, la fabrication d'une bande de roulement composite est par définition plus complexe et donc plus coûteuse que celle d'une bande de roulement conventionnelle, nécessitant en particulier l'emploi de machines complexes de coextrusion ;
- lors de la fabrication, après découpe de la bande de roulement aux bonnes dimensions en sortie de boudineuse, il est de surcroît nécessaire de gérer des chutes de matériaux de natures différentes, ce qui augmente encore sensiblement les coûts de production ;
- enfin, et ce n'est pas là le moindre inconvénient, une fois usée la partie radialement externe (souple) de la bande de roulement, c'est la partie initialement interne de la bande de roulement qui vient au contact de la route : on retrouve alors, bien entendu, les inconvénients d'une bande de roulement trop rigide, avec des performances non satisfaisantes du point de vue du compromis technique initialement visé.

Or, les Demanderesses ont découvert lors de leurs recherches qu'une composition de caoutchouc spécifique, à base d'un taux élevé de charge inorganique renforçante et d'un composé bismaléimide, permet d'obtenir, grâce à un phénomène inattendu "d'auto-accommodation", une bande de roulement présentant un véritable gradient de rigidité, radialement croissant de la surface vers l'intérieur de la bande de roulement. Ce gradient de rigidité est obtenu non seulement de manière simple et économique, mais encore pérenne, permettant ainsi de maintenir à un très haut niveau le compromis entre adhérence et comportement routier des pneumatiques, tout au long de la durée de vie de ces derniers.

En conséquence, un premier objet de l'invention concerne une bande de roulement de pneumatique comportant une composition de caoutchouc à base d'au moins (pce = parties en poids pour cent parties d'élastomère) :
- (i) un élastomère diénique ;
- (ii) plus de 60 pce d'une charge inorganique renforçante;
- (iii) entre 2 et 15 pce d'un agent de couplage ;
- (iv) entre 4 et 12 pce d'un composé bismaléimide.

Les composés bismaléimide sont bien connus de l'homme du métier pour leur capacité à former, par polymérisation, un réseau résine renforçant tridimensionnel (ci-après "réseau bismaléimide") lors d'une opération de cuisson. Ils ont été utilisés dans des compositions de caoutchouc, notamment pour pneumatiques, pour des applications aussi variées qu'adhésion, renforcement, résistance au déchirement, vulcanisation. Pour une description détaillée de ces composés, de leurs procédés d'obtention ou de leurs diverses applications, notamment en caoutchouterie pneumatique, on pourra se reporter aux documents suivants : FR-A-1 257 913, FR-A-2 611 209, EP-A-0 345 825, EP-A-0 410 152, EP-A-0 475 222, EP-A-0 536 701, EP-A-0 564 966, EP-A-1 083 199, US-A-2 289 504, US-A-3 219 091, US-A-4 803 250, US-A-4 818 601, US-A-5 109 055, US-A-5 153 248, US-A-5 262 488, US-A-5 300 585, US-A-5 985 963, demandes japonaises publiées sous les Nos JP1989/62338, JP1989/278543, JP 1991/54235.

Toutefois, à la connaissance des Demanderesses, aucun document de l'état de la technique ne décrit l'utilisation en bande de roulement de pneumatique, dans les proportions ici enseignées (entre 4 et 12 pce), d'un composé bismaléimide en combinaison avec un taux aussi élevé (plus de 60 pce, de préférence plus de 70 pce) d'une charge inorganique renforçante telle que silice. Les connaissances de l'homme du métier, accumulées essentiellement dans le domaine des compositions de caoutchouc chargées majoritairement de noir de carbone, l'éloignaient au contraire d'une telle utilisation, en raison d'un pouvoir rigidifiant, pour ce type de composés bismaléimide, jugé rédhibitoire vis-à-vis notamment des propriétés d'adhérence mentionnées supra. Pour illustrer ce préjugé, on se reportera par exemple à la demande EPA-1 083 199 précitée dont les exemples de réalisation sont limités à des taux de composés bismaléimide compris dans un domaine de 1 à 4 pce, ceci quel que soit le type de charge renforçante employée.

L'invention a également pour objet l'utilisation d'une telle bande de roulement pour la fabrication de pneumatiques neufs ou le rechapage de pneumatiques usagés. La bande de roulement conforme à l'invention est particulièrement adaptée aux pneumatiques destinés à équiper des véhicules de tourisme, véhicules 4x4 (à 4 roues motrices), motos, camionnettes, "Poids-lourd" (i.e., métro, bus, engins de transport routier, véhicules hors-la-route).

L'invention a également pour objet ces pneumatiques eux-mêmes lorsqu'ils comportent une bande de roulement conforme à l'invention. Elle concerne en particulier les pneumatiques du type "hiver" destinés aux routes enneigées ou verglacées.

L'invention a aussi pour objet un procédé pour préparer une bande de roulement de pneumatique présentant, après cuisson et rodage mécanique du pneumatique la comportant, un gradient de rigidité radialement croissant de la surface vers l'intérieur de la bande de roulement, ce procédé étant caractérisé en ce qu'il comporte les étapes suivantes :
- incorporer à un élastomère diénique, dans un mélangeur, au cours d'une première étape dite "non-productive" :
   - plus de 60 pce d'une charge inorganique renforçante;
   - entre 2 et 15 pce d'un agent de couplage ;
   - entre 4 et 12 pce d'un composé bismaléimide,
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite, au cours d'une seconde étape dite "productive" :
   - un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

L'invention ainsi que ses avantages seront aisément compris à la lumière de la description et des exemples qui suivent.

### I. MESURES ET TESTS UTILISES

Les bandes de roulement et compositions de caoutchouc constitutives de ces bandes de roulement sont caractérisées ou testées comme indiqué ci-après.

### I-1. Dureté Shore A

La dureté Shore A des compositions après cuisson est appréciée conformément à la norme ASTM D 2240-86.

### I-2. Essais de traction

Les essais de traction permettent de déterminer les contraintes d'élasticité et les propriétés à la rupture, après cuisson. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux (ou contraintes apparentes, en MPa) à 10% d'allongement (notés MA10), 100% d'allongement (notés MA100) et 300% d'allongement (notés MA300).

On mesure aussi le module sécant nominal à 10% d'allongement, après une accommodation de 15% (i.e., une extension à 15% suivie d'un relâchement à 0%) au lieu de 10% comme précédemment pour le module MA10. Ce module dit "accommodé" est noté MA10_{Ac}. Toutes ces mesures de traction sont effectuées dans les conditions normales de température et d'hygrométrie (23±2°C et 50±5% d'humidité relative, selon norme française NF T 40-101 de décembre 1979).

### I-3. Accommodation mécanique

Par "accommodation mécanique", on entend un simple rodage du pneumatique par lequel sa bande de roulement est mise en contact avec le sol au cours d'un roulage, c'est-à-dire en conditions de travail, pendant quelques dizaines de secondes ou quelques minutes au plus. Cette opération de rodage peut être conduite sur une machine de roulage automatique ou directement sur un véhicule automobile ; elle peut être réalisée de différentes manières, par exemple par un simple roulage en ligne droite de quelques dizaines ou centaines de mètres, par un freinage longitudinal ou encore par une mise en dérive du pneumatique (virages), l'essentiel étant de commencer à faire "travailler" la bande de roulement dans des conditions d'usage normales.

A titre d'exemple, une telle accommodation mécanique peut être réalisée par un rodage dit "standard" consistant en un simple roulage en ligne droite sur une longueur de 400 mètres à une vitesse de 60 km/h, sur un véhicule automobile déterminé, sans dérive ni carrossage imposé au pneumatique, suivi d'un freinage longitudinal modéré (distance de freinage de 30 à 40 mètres) pour stopper le véhicule. Ce rodage standard est en outre réalisé sous des conditions normales de pression (celles préconisées par le constructeur du véhicule utilisé) et de charge (1 seule personne à bord du véhicule).

### II. DESCRIPTION DETAILLEE DE L'INVENTION

Les bandes de roulement selon l'invention sont formées, au moins en partie, d'une composition de caoutchouc à base d'au moins : (i) un (au moins un) élastomère diénique ; (ii) une quantité minimale (plus de 60 pce) d'une (au moins une) charge inorganique à titre de charge renforçante ; (iii) un (au moins un) agent de couplage (entre 2 et 15 pce) assurant la liaison entre la charge inorganique renforçante et cet élastomère diénique ; (iv) un (au moins un) composé bismaléimide (entre 4 et 12 pce).

Bien entendu, par l'expression composition "à base de", il faut entendre une composition comportant le mélange et/ou le produit de réaction *in situ* des différents constituants utilisés, certains de ces constituants de base (par exemple la charge inorganique renforçante, l'agent de couplage, le composé bismaléimide) étant susceptibles de, ou destinés à réagir entre eux, au moins en partie, lors des différentes phases de fabrication des bandes de roulement, en particulier au cours de leur vulcanisation ou cuisson.

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non). Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15%.(% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, l'homme du métier du pneumatique comprendra que la présente invention est en premier lieu mise en oeuvre avec des élastomères diéniques fortement insaturés, en particulier avec :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di-alkyl(C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (notée "Tg" - mesurée selon norme ASTM D3418-82) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, de manière particulièrement préférentielle, l'élastomère diénique de la composition utilisée dans la bande de roulement conforme à l'invention est choisi dans le groupe des élastomères diéniques fortement insaturés constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

La bande de roulement conforme à l'invention est préférentiellement destinée à un pneumatique pour véhicule tourisme. Dans un tel cas, l'élastomère diénique est de préférence un copolymère SBR, en particulier un SBR préparé en solution, utilisé de préférence en mélange avec un polybutadiène ; plus préférentiellement, le SBR a une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C, et le polybutadiène possède plus de 90% de liaisons cis-1,4.

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", on entend de manière connue toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique (pour bande dé roulement):

Préférentiellement, la charge inorganique renforçante est une charge du type siliceuse (par exemple silice) ou alumineuse (par exemple alumine), ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; par silice hautement dispersible, on entend de manière connue toute silice ayant une aptitude importante à la désagglomération et à la dispersion dans une matrice élastomérique, observable de manière connue par microscopie électronique ou optique, sur coupes fines. Comme exemples de telles silices HDS préférentielles, on peut citer les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, des silices précipitées traitées telles que par exemple les silices "dopées" à l'aluminium décrites dans la demande EP-A-0735088 précitée.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm, telle que décrite dans la demande EP-A-0 810 258 précitée. Comme exemples de telles alumines renforçantes, on peut citer notamment les alumines "Baikalox" "A125" ou "CR125" (société Baïkowski), "APA-100RDX" (société Condea), "Aluminoxid C" (société Degussa) ou "AKP-G015" (Sumitomo Chemicals). On peut aussi mettre en oeuvre l'invention en utilisant comme charge inorganique renforçante les (oxyde)hydroxydes d'aluminium spécifiques tels que décrits dans WO99/28376.

L'état physique sous lequel peut se présenter la charge inorganique renforçante est indifférent, que ce soit sous forme de poudre, de microperles, de granulés, de pellets, de billes ou toute autre forme densifiée appropriée.

Bien entendu on entend également par charge inorganique renforçante des mélanges de différentes charges inorganiques renforçantes, en particulier de charges siliceuses et/ou alumineuses hautement dispersibles telles que décrites ci-dessus.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 250 m²/g, plus préférentiellement comprise entre 80 et 230 m²/g.

La charge inorganique utilisée à titre de charge renforçante doit être présente à un taux élevé, supérieur à 60 pce, de préférence supérieur à 70 pce, ce qui est une des caractéristiques essentielles de l'invention, cette charge inorganique renforçante pouvant constituer la totalité ou la majorité de la charge renforçante totale, dans ce dernier pas associée par exemple à une quantité de noir de carbone minoritaire (de préférence inférieure à 20 pce, plus préférentiellement inférieure à 15 pce).

L'homme du métier comprendra aisément que le taux optimal sera différent selon la nature de la charge inorganique renforçante utilisée et selon le type de pneumatique concerné, par exemple pneumatique pour moto, pour véhicule de tourisme ou encore pour véhicule utilitaire tel que camionnette ou Poids lourd. De manière préférentielle, le taux de charge inorganique renforçante est compris entre 70 et 120 pce, plus préférentiellement encore compris dans un domaine allant de 80 à 110 pce environ, par exemple de 80 à 105 pce dans le cas particulier de bandes de roulement pour pneumatiques tourisme.

De préférence, dans la bande de roulement conforme à l'invention, la charge inorganique renforçante constitue plus de 80% en poids de la charge renforçante totale, plus préférentiellement plus de 90% en poids (voire la totalité) de cette charge renforçante totale. On pourra toutefois, sans affecter de manière notable l'effet technique visé, utiliser une faible quantité de noir de carbone, de préférence inférieure à 20%, plus préférentiellement encore inférieure à 10% en poids par rapport à la quantité de charge renforçante totale.

Le noir de carbone, s'il est utilisé, est de préférence présent à un taux compris entre 2 et 15 pce, plus préférentiellement entre 4 et 12 pce. Il est notamment utilisable comme simple agent de pigmentation noir, ou encore pour protéger la bande de roulement de différentes sources de vieillissement atmosphérique tel que ozone, oxydation, rayonnement UV. On sait d'autre part que certains additifs de caoutchouterie, en particulier certains agents de couplage, sont disponibles sous une forme supportée par du noir de carbone, l'utilisation de tels additifs impliquant donc l'incorporation, en faible proportion, de noir de carbone. Comme noirs de carbone conviennent tous les noirs de carbone, notamment les noirs du type HAF, ISAF, SAF, conventionnellement utilisés dans les pneumatiques et particulièrement dans les bandes de roulement de ces pneumatiques ; à titre d'exemples non limitatifs de tels noirs, on peut citer les noirs N115, N134, N234, N339, N347, N375.

Dans le présent exposé, la surface spécifique ("aire massique") BET est déterminée de manière connue, par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 [méthode volumétrique multipoints (5 points) - gaz: azote - dégazage: 1heure à 160°C - domaine de pression relative *p*/*po* : 0.05 à 0.17]. La surface spécifique CTAB est la surface externe déterminée selon la norme française NF T 45-007 de novembre 1987 (méthode B).

Enfin, à titre de charge équivalente d'une telle charge inorganique renforçante, pourrait être utilisée une charge renforçante du type organique, notamment un noir de carbone, recouvert au moins en partie d'une couche inorganique (par exemple, une couche de silice), nécessitant quant à elle l'utilisation d'un agent de couplage pour assurer la liaison avec l'élastomère.

### II-3. Agent de couplage

De manière connue, en présence d'une charge inorganique renforçante, il est nécessaire d'utiliser un agent de couplage ou agent de liaison dont la fonction est d'assurer une connexion suffisante, de nature chimique et/ou physique, entre la charge inorganique (surface de ses particules) et l'élastomère diénique.

Un tel agent de couplage, par conséquent au moins bifonctionnel, a par exemple comme formule générale simplifiée "Y-T-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice) ;
- X représente un groupe fonctionnel (fonction "X") capable de se lier physiquement et/ou chimiquement à l'élastomère diénique, par exemple par l'intermédiaire d'un atome de soufre ;
- T représente un groupe divalent permettant de relier Y et X.

Les agents de couplage ne doivent en particulier pas être confondus avec de simples agents de recouvrement de charge inorganique qui de manière connue peuvent comporter la fonction Y active vis-à-vis de la charge inorganique mais sont dépourvus de la fonction X active vis-à-vis de l'élastomère.

Des agents de couplage (silice/élastomère diénique), d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y.

On utilise notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357, WO 02/083782.

Conviennent en particulier pour la mise en oeuvre de l'invention, sans que la définition ci-après soit limitative, des silanes polysulfurés dits "symétriques" répondant à la formule générale (I) suivante:

(I) Z - A - Sₙ - A - Z ,

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 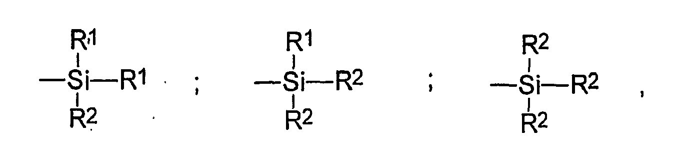
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme agent de couplage avantageux les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande WO 02/083782 précitée.

A titre d'exemples d'agents de couplage autres que les alkoxysilanes polysulfurés précités, on citera notamment des polyorganosiloxanes bifonctionnels tels que décrits par exemple dans les demandes WO99/02602 ou WO 01/96442 précitées, ou encore les polysulfures d'hydroxysilane tels que décrits dans les demandes WO 02/30939 et WO 02/31041 précitées.

Dans les bandes de roulement conformes à l'invention, la teneur en agent de couplage est préférentiellement comprise entre 4 et 12 pce, plus préférentiellement entre 3 et 8 pce. Mais il est en général souhaitable d'en utiliser le moins possible. Par rapport au poids de charge inorganique renforçante, le taux d'agent de couplage représente typiquement entre 0,5 et 15% en poids par rapport à la quantité de charge inorganique renforçante. Dans le cas par exemple de bandes de roulement de pneumatiques pour véhicules tourisme, l'agent de couplage est utilisé à un taux préférentiel inférieur à 12%, voire même inférieur à 10% en poids par rapport à cette quantité de charge inorganique renforçante.

L'agent de couplage pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'agent de couplage pourrait également être préalablement greffé (via la fonction "Y") sur la charge inorganique renforçante, la charge ainsi "précouplée" pouvant ensuite être liée à l'élastomère diénique par l'intermédiaire de la fonction libre "X". On préfère toutefois, notamment pour des raisons de meilleure mise en oeuvre des compositions à l'état cru, utiliser l'agent de couplage soit greffé sur la charge inorganique renforçante, soit à l'état libre (i.e., non greffé).

A l'agent de couplage peut être éventuellement associé un "activateur de couplage" approprié, c'est-à-dire un corps (composé unique ou association de composés) qui, mélangé avec cet agent de couplage, augmente l'efficacité de ce dernier. Des activateurs de couplage d'alkoxysilanes polysulfurés ont par exemple été décrits dans les demandes internationales WO00/05300 et WO00/05301 précitées, consistant en l'association d'une guanidine substituée, en particulier la N,N-diphénylguanidine (en abrégé "DPG"), avec une énamine ou un dithiophospate de zinc. La présence de ces activateurs de couplage permettra par exemple de maintenir le taux d'agent de couplage à un niveau préférentiel inférieur à 10%, voire même inférieur à 8% en poids par rapport à la quantité de charge inorganique renforçante, ou encore de réduire le taux de charge inorganique renforçante en raison du couplage amélioré avec l'élastomère diénique.

### II-4. Composé bismaléimide

Les compositions de caoutchouc des bandes de roulement de l'invention contiennent au moins, à un taux compris entre 4 et 12 pce, un composé bismaléimide destiné à former *in situ,* après cuisson (vulcanisation) de la bande de roulement, un réseau résine tridimensionnel qui vient se superposer, s'interpénétrer avec le réseau (charge inorganique/élastomère) d'une part, avec le réseau (élastomère/soufre) d'autre part (si l'agent de réticulation est le soufre).

L'invention est de préférence mise en oeuvre avec des composés bismaléimide répondant à la formule générale: 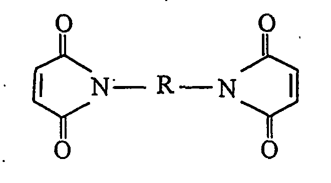 dans laquelle R est un radical hydrocarboné, aromatique ou aliphatique, cyclique ou acyclique, substitué ou non substitué, un tel radical pouvant comporter un hétéroatome choisi parmi O, N et S ; ce radical R comporte de préférence de 2 à 24 atomes de carbone.

Une telle définition inclut par exemple les N,N'-(éthylène)-bismaléimides, les N,N'-(hexaméthylène)-bismaléimides, les N,N'-(dodécaméthylène)-bismaléimides, les N,N'-(2,2,4-triméthyl-hexaméthylène)-bismaléimides, les N,N'-(oxy-dipropylène)-bismaléimides, les N,N'-(amino-di-propylène)-bismaléimides, les N,N'-(1,3-cyclohexylène)-bismaléimides, les N,N'-(1,4-cyclo-hexylène)-bismaléimides, les N,N'-(méthylène-1,4-dicyclohexylène)-bismaléimides, les N,N'-(3,3'-diméthyl-4,4'-biphénylène)-bismaléimides, les N,N'-(m-phénylène)-bismaléimides, les N,N'-(p-phénylène)-bismaléimides, les N,N'-(o-phénylène)-bismaléimides, les N,N'-(1,3-naphtylène)-bismaléimides, les N,N'-(1,4-naphtylène)-bismaléimides, les N,N'-(1,5-naphtylène)-bismaléimides, les N,N'-(4,6-diméthyl-1,3-phénylène)-bismaléimides, les N,N'-(2,4-toluylène)-bismaléimides, les N,N'-(2,6-toluylène)-bismaléimides, les N,N'-(méthylène-di-p-phénylène)-bismaléimides, les N,N'-(oxy-dipropylène)-bismaléimides, les N,N'-(oxy-di-p-phénylène)-bismaléimides, les N,N'-(4,4'-diphénylméthane)-bismaléimides, les N,N'-(4,4'-diphényléther)-bismaléimides, les N,N'-(4,4'-diphénylsulfone)-bismaléimides, les N,N'-(4,4'-diphényldithio)-bismaléimides.

Par composé bismaléimide, on entend aussi les composés poly-bismaléimide (polymères ou oligomères de bismaléimide).

Les bismaléimides préférentiellement choisies sont la N,N'-(m-phénylène)-bismaléimide (en abrégé "MPBM") et la N,N'-(4,4'-diphénylméthane)-bismaléimide (en abrégé "DPBM").

La quantité de composé bismaléimide peut varier en fonction de la nature de l'élastomère diénique utilisé, de la quantité de charge inorganique renforçante, dans un domaine compris entre 4 et 12 pce. En dessous du minima indiqué, l'effet technique visé n'est pas obtenu, alors qu'au delà du maxima indiqué, on s'expose à une rigidification trop élevée, une pénalisation excessive de l'hystérèse et une augmentation sensible des coûts. Une quantité comprise dans un domaine de 5 à 10 pce s'est révélée bien adaptée, notamment dans le cas de bandes de roulement pour pneumatiques tourisme.

Un initiateur radicalaire (générateur de radicaux libres), par exemple un peroxyde organique, pourrait être éventuellement ajouté, en très faible quantité, aux compositions de caoutchouc pour activer la formation du réseau résine bismaléimide, lors de leur cuisson.

### 11-5. Additifs divers

Bien entendu, les compositions de caoutchouc des bandes de roulement conformes à l'invention comportent également tout ou partie des additifs habituellement utilisés dans les compositions de caoutchouc diénique réticulables au soufre et destinées à la fabrication de bandes de roulement, comme par exemple des plastifiants, des pigments, des agents de protection du type antioxydants, antiozonants, des agents anti-fatigue, d'autres résines renforçantes, un système de réticulation à base soit de soufre, soit de donneurs de soufre et/ou de peroxyde, des accélérateurs de vulcanisation, des activateurs de vulcanisation, des huiles d'extension, etc.. A la charge inorganique renforçante peut être également associée, si besoin est, une charge blanche conventionnelle non renforçante, comme par exemple des particules d'argile, de bentonite, talc, craie, kaolin, d'oxydes de titane.

Les compositions de caoutchouc des bandes de roulement de l'invention peuvent également contenir, en complément des agents de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur processabilité à l'état cru, ces agents, utilisés à un taux préférentiel compris entre 0,5 et 3 pce, étant par exemple des alkylalkoxysilanes (notamment des alkyltriéthoxysilanes), des polyols, des polyéthers (par exemple des polyéthylèneglycols), des amines primaires, secondaires ou tertiaires, des polyorganosiloxanes hydroxylés ou hydrolysables, par exemple des α,ω-dihydroxypolyorganosiloxanes (notamment des α,ω-dihydroxypolydiméthyl-siloxanes).

### II-6. Fabrication des bandes de roulement

Les compositions de caoutchouc des bandes de roulement de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Le procédé conforme à l'invention, pour préparer une bande de roulement de pneumatique présentant, après cuisson et rodage mécanique du pneumatique auquel elle est destinée, un gradient de rigidité radialement croissant de la surface vers l'intérieur de la bande de roulement, comporte les étapes suivantes :
- incorporer à un élastomère diénique, dans un mélangeur, au cours d'une première étape dite "non-productive" :
   - plus de 60 pce d'une charge inorganique renforçante ;
   - entre 2 et 15 pce d'un agent de couplage ;
   - entre 4 et 12 pce d'un composé bismaléimide ;
      en malaxant thermomécaniquement le tout, en une ou plusieurs fois, jusqu'à atteindre une température maximale comprise entre 130°C et 200°C ;
- refroidir l'ensemble à une température inférieure à 100°C ;
- incorporer ensuite, au cours d'une seconde.étape dite "productive" :
   - un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

Selon un mode préférentiel, tous les constituants de base des compositions des bandes de roulement conformes à l'invention, à l'exception du système de vulcanisation et de l'éventuel initiateur radicalaire, à savoir la charge inorganique renforçante, l'agent de couplage et le composé bismaléimide sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C. Mais tout ou partie du composé bismaléimide pourrait être aussi incorporé au cours de la phase productive.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. Une seconde étape de travail thermomécanique pourrait être éventuellement ajoutée, dans ce mélangeur interne, par exemple après une étape de refroidissement intermédiaire (de préférence à une température inférieure à 100°C), dans le but de faire subir aux compositions un traitement thermique complémentaire, notamment pour améliorer la dispersion, dans la matrice élastomérique, de la charge inorganique renforçante, de l'agent de couplage et du composé bismaléimide.

Après refroidissement du mélange ainsi obtenu à l'issue de la première phase non-productive, on incorpore alors à basse température le système de vulcanisation, dans un mélangeur externe tel qu'un mélangeur à cylindres. Le tout est alors mélangé (phase productive) pendant quelques minutes, par exemple entre 5 et 15 minutes.

Le système de vulcanisation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels que oxyde de zinc, acide stéarique, dérivés guanidiques (en particulier diphénylguanidine). Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable directement comme bande de roulement de pneumatique.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté, de la cinétique de vulcanisation de la composition considérée et de la taille du pneumatique considéré.

Pour résumer, dans le procédé conforme à l'invention, conformément à l'ensemble des indications données précédemment, on a de préférence au moins une, plus préférentiellement toutes les caractéristiques suivantes qui sont vérifiées:
- le taux de charge inorganique renforçante est supérieur à 70 pce ;
- le taux d'agent de couplage est compris entre 4 et 12 pce ;
- le taux de composé bismaléimide est compris entre 5 et 10 pce ;
- la température maximale de malaxage thermomécanique est comprise entre 145°C et 180°C;
- la charge inorganique renforçante est une charge siliceuse ou alumineuse ;
- le taux de noir de carbone est inférieur à 20 pce, de préférence compris entre 2 et 15 pce ;
- l'agent de couplage au moins bifonctionnel est un organosilane ou un polyorganosiloxane ;
- Le composé bismaléimide est la N,N'-(m-phénylène)-bismaléimide ou la N,N'-(4,4'-diphényl-méthane)-bismaléimide ;
- l'élastomère diénique est un copolymère de butadiène-styrène (SBR), de préférence utilisé en mélange avec un polybutadiène ;
- la charge inorganique renforçante représente plus de 80% en poids de la charge renforçante totale.

Plus préférentiellement, dans ce procédé, on a au moins une, encore plus préférentiellement toutes les caractéristiques suivantes qui sont vérifiées:
- le taux de charge inorganique est compris dans un domaine de 80 à 110 pce ;
- le taux d'agent de couplage est compris entre 3 et 8 pce ;
- la charge inorganique renforçante est de la silice ;
- le taux de noir de carbone est inférieur à 15 pce, de préférence compris entre 4 et 12 pce ;
- l'agent de couplage est un organosilane ;
- le composé bismaléimide est la N,N'-(4,4'-diphénylméthane)bismaléimide;
- l'élastomère diénique est un SBR préparé en solution utilisé en mélange avec un polybutadiène possédant plus de 90% (mol) de liaisons cis-1,4 ;
- la charge inorganique renforçante représentant plus de 90% en poids de la charge renforçante totale.

Bien entendu, l'invention concerne les bandes de roulement précédemment décrites tant à l'état cru (i.e., avant cuisson) qu'à l'état cuit (i.e., après réticulation ou vulcanisation).

### II-7. Propriétés des bandes de roulement

Il est aisément vérifiable que l'utilisation d'un taux élevé (plus de 60 ou plus de 70 pce) de charge renforçante, quel que soit le type de charge utilisée (noir de carbone ou charge inorganique), en combinaison avec plus de 4 pce de composé bismaléimide tel que DPBM s'accompagne, après cuisson des compositions, d'une forte augmentation des modules à faible déformation (les valeurs de MA10 pouvant être par exemple doublées) ainsi que de la dureté Shore A (augmentée par exemple de 10 à 20%).

Une telle augmentation de rigidité, attendue, laissait présager à l'homme du métier, pour des pneumatiques montés sur véhicules automobiles dont les bandes de roulement auraient été constituées de telles compositions, certes une amélioration du comportement routier en raison d'une rigidification et donc d'une poussée de dérive augmentée, mais aussi et surtout une chute rédhibitoire des performances d'adhérence sur sol mouillé, enneigé ou verglacé.

Une telle chute des performances d'adhérence a bien été constatée, en effet, pour des bandes de roulement comparables chargées de noir de carbone, mais pas dans le cas de bandes de roulement selon l'invention ; ces dernières, de manière surprenante, bénéficient du comportement routier amélioré sans pénalisation des performances d'adhérence ci-dessus.

Il faut donc nécessairement en déduire que le réseau résine apporté par le composé bismaléimide, dans les compositions de caoutchouc des bandes de roulement, "s'exprime" différemment selon que ces compositions sont chargées conventionnellement de noir de carbone, ou au contraire d'une charge inorganique renforçante telle que de la silice, aux taux élevés préconisés.

Des essais complémentaires ont révélé une propriété inattendue pour les bandes de roulement conformes à l'invention, expliquant a posteriori les différences de comportement ci-dessus.

Ces bandes de roulement, grâce à un phénomène inattendu d'auto-accommodation après roulage, présentent dans la direction radiale, un gradient de rigidité fortement marqué, cette rigidité croissant radialement de la surface vers l'intérieur de la bande de roulement selon un profil continu, sur toute l'épaisseur de la bande de roulement ou tout au moins de la portion de bande de roulement hybride, le cas échéant, comportant la composition renforcée de charge inorganique et de bismaléimide conformément à l'invention. Une telle caractéristique n'existe pas dans le cas d'une bande de roulement témoin renforcée de noir de carbone et du composé bismaléimide.

De l'ensemble des résultats précédents, on peut penser que le réseau tridimensionnel rigidifiant formé par le composé bismaléimide présente une solidité moindre dans le cas de la bande de roulement chargée de silice que dans celui de la bande de roulement conventionnelle chargée de noir de carbone. Grâce à cette fragilité relative, des sollicitations de faible amplitude, typiques de celles subies lors du roulage par la partie superficielle de la bande de roulement, seraient suffisantes pour casser le réseau résine bismaléimide de surface, rendre ainsi la partie superficielle de la bande de roulement plus souple, moins rigide, et lui faire recouvrer ainsi les excellentes performances d'adhérence qui sont les siennes en l'absence de bismaléimide. Par contre, en profondeur, le réseau résine serait peu affecté par le roulage, d'autant moins que l'on pénètre à l'intérieur de cette bande de roulement, garantissant ainsi la rigidité supplémentaire suffisante pour un comportement routier amélioré (plus forte poussée de dérive).

Ainsi, la bande de roulement conforme à l'invention, souple en surface et rigide en profondeur une fois accommodée (rodée), concilie les deux exigences contradictoires que sont comportement routier et adhérence sur sol mouillé, enneigé ou verglacé.

Le gradient de rigidité décrit ci-dessus s'illustre notamment par un écart très sensible de module à faible déformation, ou de dureté Shore, entre la partie radialement la plus externe de la bande de roulement, celle au contact du sol, et la partie radialement la plus interne de cette bande de roulement (ou portion de bande de roulement, dans le cas par exemple d'une bande de roulement hybride) rigidifiée par la présence du réseau résine bismaléimide.

Après un rodage standard de pneumatiques tourisme conformes à l'invention, le module sécant MA10 (10% allongement) peut ainsi varier avantageusement du simple au double, entre la surface (typiquement entre 2 et 8 MPa, selon le type de pneumatique) et la partie radialement la plus interne (typiquement entre 4 et 16 MPa, selon le type de pneumatique) de la bande de roulement.

Des mesures comparatives de dureté Shore réalisées à la surface de bandes de roulement conformes ou non conformes à l'invention conduisent typiquement aux résultats suivants :
- Charge noir de carbone :
   - sans bismaléimide, pneu neuf: entre 60 et 70 points ;
   - avec bismaléimide (6 pce), pneu neuf : entre 70 et 80 points ;
   - avec bismaléimide (6 pce), après rodage standard: entre 70 et 80 points.
- Charge silice:
   - sans bismaléimide, pneu neuf : entre 60 et 70 points ;
   - avec bismaléimide (6 pce), pneu neuf : entre 70 et 80 points ;
   - avec bismaléimide (6 pce), après rodage standard : entre 60 et 70 points.

Le pneu conventionnel dont la bande de roulement est renforcée de noir de carbone et de bismaléimide conserve sa rigidité de surface après rodage, alors que le pneumatique conforme à l'invention dont la bande de roulement est renforcée de silice et de bismaléimide recouvre son domaine de dureté initiale après rodage, ce qui confirme les évolutions de modules MA10 commentées précédemment.

L'invention permet ainsi, de manière inattendue, de pouvoir moduler les différences de rigidité entre la surface d'une bande de roulement et sa partie radialement interne, et donc d'ajuster le compromis adhérence/comportement routier visé.

Il est désormais possible de produire des pneumatiques à faible résistance au roulement dont la bande de roulement (tout au moins pour la portion de bande de roulement comportant le composé bismaléimide dans le cas par exemple d'une bande de roulement hybride du type *"cap-base")* présentera un module augmentant radialement selon un profil continu, faible en surface (compris par exemple entre 2 et 8 MPa dans le cas d'un pneumatique tourisme), et élevé en profondeur (compris par exemple entre 8 et 16 MPa dans sa partie radialement la plus interne, pour ce même pneumatique tourisme).

De manière préférentielle, dans le cas d'un pneumatique tourisme conventionnel (été), le module MA10 sera ainsi compris entre 5 et 8 MPa (notamment entre 5,5 et 7,5 MPa) en surface, entre 8 et 14 MPa (notamment entre 9 et 13 MPa) en profondeur (partie radialement la plus interne). De manière préférentielle, dans le cas d'un pneumatique "hiver" destiné aux routes enneigées ou verglacées, le module MA10 sera compris entre 3 et 6 MPa en surface (notamment entre 3,5 et 5,5 MPa), entre 6 et 12 MPa (notamment entre 7 et 11 MPa) en profondeur.

### III. EXEMPLE DE REALISATION

### III-1. Préparation des compositions de caoutchouc et bandes de roulement

On procède pour les essais qui suivent de la manière suivante: on introduit dans un mélangeur interne, rempli à 70% et dont la température initiale de cuve est d'environ 60°C, successivement la charge renforçante, l'agent de couplage, l'élastomère diénique ou le mélange d'élastomères diéniques, le composé bismaléimide ainsi que les divers autres ingrédients, à l'exception du système de vulcanisation. On conduit alors un travail thermomécanique (phase non-productive) en une étape, qui dure au total environ 3 à 4 minutes, jusqu'à atteindre une température maximale de "tombée" de 165°C. On récupère le mélange ainsi obtenu, on le refroidit puis on incorpore soufre et accélérateur sulfénamide sur un mélangeur externe (homo-finisseur) à 30°C, en mélangeant le tout (phase productive) pendant un temps approprié, compris entre 5 et 12 minutes.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de bandes de roulement de pneumatiques tourisme à carcasse radiale (dimensions 195/65 R15 - indice de vitesse H).

### III-2. Essais

Dans cet essai, on compare 7 compositions de caoutchouc, à base d'élastomères diéniques SBR et BR connus, renforcées par du noir de carbone ou de la silice, utilisables comme bandes de roulement de pneumatiques pour véhicules tourisme été.

Ces compositions notées C-1 à C-7 se distinguent essentiellement par les caractéristiques qui suivent:
- C-1: renforcée par 70 pce de noir de carbone, sans bismaléimide ;
- C-2 : renforcée par 70 pce de noir de carbone + 6 pce de bismaléimide ;
- C-3 : renforcée par 80 pce de silice, sans bismaléimide ;
- C-4 : renforcée par 80 pce de silice + 6 pce de bismaléimide ;
- C-5 : renforcée par 80 pce de silice + 8 pce de bismaléimide ;
- C-6 : renforcée par 80 pce silice + 2 pce de bismaléimide ;
- C-7 : renforcée par 60 pce silice + 2 pce de bismaléimide.

Les compositions C-1 et C-3 constituent les références "noir" et "silice" de cet essai. Leur formulation respective a été ajustée de manière à les amener toutes deux à isorigidité initiale (dureté Shore A), avant incorporation de bismaléimide.

Les compositions C-3 à C-7 contiennent en plus l'agent de couplage TESPT (taux de 8% en poids par rapport à la quantité de silice) et la DPG (environ 2,6% en poids par rapport à la quantité de silice). Dans ces compositions C-3 à C-7, le noir de carbone est présent à très faible taux (6 pce), essentiellement utilisé comme agent de pigmentation noire.

Seules les bandes de roulement comportant les compositions C-4 et C-5 sont donc conformes à l'invention. Les compositions C-6 et C-7 ne sont pas conformes à l'invention car elles comportent un taux de bismaléimide insuffisant, quel que soit le taux de charge inorganique renforçante (60 ou 80 pce).

Les tableaux 1 et 2 donnent la formulation des différentes compositions (tableau 1 - taux des différents produits exprimés en pce), leurs propriétés après cuisson (40 min à 150°C).

Une comparaison, tout d'abord, des compositions témoins C-1 et C-3 (dépourvues de bismaléimide) montre qu'après cuisson, elles présentent une rigidité équivalente (duretés Shore A identiques ; valeurs de module à faible déformation MA10 très proches) et des propriétés de renforcement identiques (modules identiques aux fortes déformations - MA100 et MA300).

Après incorporation de bismaléimide en quantité suffisante (6 ou 8 pce), on observe pour les deux types de compositions (comparer C-2 à C-1 d'une part, C-4 et C-5 à C-3 d'autre part) une forte remontée de la valeur de module à faible déformation (valeurs MA10 pratiquement doublées) ainsi que de la dureté Shore (augmentée de 10 à 20%).

Cette rigidification peut être qualifiée d'attendue, comme expliqué précédemment.

Toutefois, une différence sensible doit être notée entre les compositions C-2 d'une part et C-4 ou C-5 d'autre part, différence relative à l'évolution du module (MA10_{Ac}.) sous faible déformation, après accommodation mécanique (15%).

Dans le cas de la composition témoin C-2 (charge noir de carbone), on note que le module MA10_{Ac}. reste très élevé après accommodation (9,1 MPa à comparer à 5,5 MPa initial sur la composition C-1, soit environ 65% supérieur) ; au contraire, ce même module MA10_{Ac}. chute très fortement (de 11-12 MPa à 7-7,5 MPa) pour les compositions C-4 et C-5-(charge silice), recouvrant pratiquement la valeur initiale MA10 (6,0 MPa) enregistrée sur la composition témoin C-3 dépourvue de bismaléimide. Les rapports (MA10_{Ac.}/MA10) du tableau 2, exprimés en %, expriment clairement cette différence de comportement entre les compositions C-2 et C-4 ou C-5.

Ces résultats démontrent que le réseau bismaléimide "s'exprime" donc différemment, présente une solidité différente selon que les compositions sont chargées de noir de carbone, ou d'une charge inorganique renforçante telle que de la silice, aux taux élevés préconisés.

Quant aux autres compositions non conformes à l'invention C-6 et C-7, comportant un taux plus faible (insuffisant) de bismaléimide (2 pce), on note que le gain en rigidité est trop faible ou inexistant (voir module MA10 et dureté Shore).

Les compositions de caoutchouc précédemment décrites, à base d'élastomère diénique, de charge inorganique renforçante, d'un agent de couplage et d'un composé bismaléimide, dans les proportions indiquées supra, peuvent constituer avantageusement la totalité de la bande de roulement conforme à l'invention.

Mais l'invention s'applique également aux cas où ces compositions de caoutchouc comportant le composé bismaléimide forment une partie seulement d'une bande de roulement composite telle que décrite par exemple en introduction du présent mémoire, constituée d'au moins deux couches radialement superposées de rigidités différentes (structure dite *"cap-base"),* toutes deux destinées à entrer en contact avec la route lors du roulage du pneumatique, au cours de la vie de ce dernier. La partie comportant le composé bismaléimide pourra alors constituer la couche radialement externe de la bande de roulement destinée à entrer en contact avec le sol dès le début du roulage du pneumatique neuf, ou au contraire sa couche radialement interne destinée à entrer en contact avec le sol ultérieurement, dans les cas où l'on souhaite par exemple "retarder" l'effet technique d'auto-accommodation procuré par l'invention.

Grâce aux bandes de roulement conformes à l'invention et à la formulation spécifique de leurs compositions de caoutchouc, il est désormais possible de "réconcilier" adhérence sur sol mouillé et comportement routier, sans user de solutions complexes, coûteuses ou non pérennes telles que décrites en introduction du présent mémoire.

Les bandes de roulement conformes à l'invention offrent l'avantage majeur, comparées notamment aux bandes de roulement composites de l'art antérieur, d'une part de maintenir leur compromis de performances tout au long de la vie du pneumatique, grâce au phénomène inattendu observé d'auto-accommodation, d'autre part de présenter un véritable gradient de rigidité radial, et non un simple "accident", très localisé, de rigidité. Ce gradient de rigidité véritable conduit à un "travail" optimal des pains de gomme au contact du sol, lors du roulage et des nombreux efforts transmis à la bande de roulement, en d'autres termes est synonyme d'un pneumatique qui s'agrippe encore mieux à la route.

Ce résultat peut être obtenu tout en maintenant les performances de résistance au roulement et de résistance à l'usure aux niveaux élevés que l'on est en droit d'attendre aujourd'hui de compositions de caoutchouc à base de charges inorganiques renforçantes telles que des silices hautement dispersibles.

L'invention trouve une application avantageuse dans les pneumatiques équipant des véhicules tels que moto, voiture de tourisme, camionnettes ou Poids-lourd, en particulier dans les pneumatiques à adhérence élevée du type "neige" ou "glace" (encore appelés pneumatiques "hiver") qui, en raison d'une bande de roulement volontairement assouplie, pouvaient présenter un comportement routier sur sol sec moins performant.

**Tableau 1**

| Composition N° : | C-1 | C-2 | C-3 | C-4 | C-5 | C-6 | C-7 |
|---|---|---|---|---|---|---|---|
| SBR (1) | 70 | 70 | 70 | 70 | 70 | 70 | 70 |
| BR (2) | 30 | 30 | 30 | 30 | 30 | 30 | 30 |
| noir de carbone (3) | 70 | 70 | 6 | 6 | 6 | 6 | 6 |
| silice (4) | - | - | 80 | 80 | 80 | 80 | 60 |
| agent de couplage (5) | - | - | 6.4 | 6.4 | 6.4 | 6.4 | 6.4 |
| MPBM (6) | - | 6 | - | 6 | 8 | 2 | 2 |
| huile (7) | 20 | 20 | 39 | 39 | 39 | 39 | 39 |
| DPG (8) | - | - | 2.1 | 2.1 | 2.1 | 2.1 | 2.1 |
| ZnO | 2.5 | 2.5 | 2.5 | 2.5 | 2.5 | 2.5 | 2.5 |
| acide stéarique | 2 | 2 | 2 | 2 | 2 | 2 | 2 |
| antioxydant (9) | 1.9 | 1.9 | 1.9 | 1.9 | 1.9 | 1.9 | 1.9 |
| soufre | 1.5 | 1.5 | 1.5 | 1.5 | 1.5 | 1.5 | 1.5 |
| accélérateur (11) | 1.5 | 1.5 | 1.5 | 1.5 | 1.5 | 1.5 | 1.5 |

| | | | | | | | |
|---|---|---|---|---|---|---|---|
| (1) SBR (exprimé en SBR sec) étendu avec 37,5% en poids (26,25 pce) d'huile (soit au total 96,25 pce de SBR étendu); 26,5% de styrène, 59,5% de motifs polybutadiène 1-2 et 23% de motifs polybutadiène 1-4 trans (Tg = -29°C) ; (2) BR avec 4,3% de 1-2; 2,7% de trans ; 93% de cis 1-4 (Tg = -106°C) ; (3) noir de carbone N234 ; (4) silice "Zeosil 1165MP" de la société Rhodia, type "HDS" (BET et CTAB : environ 160 m²/g) ; (5) agent de couplage TESPT ("Si69" de la société Degussa) ; (6) N,N-(m-phénylène)-bismaléimide ("HVA2" - société Du Pont de Nemours) ; (7) huile aromatique totale (y compris huile d'extension du SBR) ; (8) diphénylguanidine (Perkacit DPG de la société Flexsys) ; (9) N-1,3-diméthylbutyl-N-phénylparaphénylènediamine (Santoflex 6-PPD de la société Flexsys) ; (10) HMT (société Degussa); (11) N-cyclohexyl-2-benzothiazyl-sulfénamide (Santocure CBS de la société Flexsys). | | | | | | | |

**Tableau 2**

| Composition N°: | C-1 | C-2 | C-3 | C-4 | C-5 | C-6 | C-7 |
|---|---|---|---|---|---|---|---|
| Shore A | 65 | 73 | 66 | 73 | 77 | 69 | 66 |
| Shore A (u. r.) | 100 | 112 | 100 | 111 | 117 | 105 | 100 |
| MA10 (MPa) | 5.5 | 11.8 | 6.0 | 12.0 | 11.5 | 7.0 | 5.9 |
| MA10(u.r.) | 100 | 210 | 100 | 200 | 190 | 120 | 100 |
| MA100(MPa) | 1.85 | 2.3 | 1.9 | 2.2 | 2.4 | 2.1 | 1.8 |
| MA300(MPa) | 2.2 | 2.0 | 2.15 | 1.6, | 2.1 | 2.1 | 1.8 |
| MA10_{Ac}. | 4.4 | 9.1 | 4.8 | 7.2 | 7.4 | - | - |
| MA10_{Ac}/MA10 | 80% | 79% | 80% | 60% | 64% | - | - |

| | | | | | | | |
|---|---|---|---|---|---|---|---|
| (u. r. : unités relatives) . | | | | | | | |

## Revendications

1. Bande de roulement de pneumatique comportant une composition de caoutchouc à base d'au moins (pce = parties en poids pour cent d'élastomère) :
- (i) un élastomère diénique ;
- (ii) plus de 60 pce d'une charge inorganique renforçante ;
- (iii) entre 2 et 15 pce d'un agent de couplage ;
- (iv) entre 4 et 12 pce d'un composé bismaléimide.

2. Bande de roulement selon la revendication 1, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

3. Bande de roulement selon les revendications 1 ou 2, la charge inorganique renforçante étant une charge siliceuse ou alumineuse, de préférence de la silice.

4. Bande de roulement selon l'une quelconque des revendications 1 à 3, la quantité de charge inorganique renforçante étant supérieure à 70 pce, de préférence comprise entre 70 et 120 pce.

5. Bande de roulement selon l'une quelconque des revendications 1 à 4, le composé bismaléimide étant la N,N'-(m-phénylène)-bismaléimide ou la N,N'-(4,4'-diphénylméthane)-bismaléimide.

6. Bande de roulement selon la revendication 5, le composé bismaléimide étant la N,N'-(4,4-diphénylméthane)-bismaléimide.

7. Bande de roulement selon l'une quelconque des revendications 1 à 6, le taux de composé bismaléimide étant compris dans un domaine de 5 à 10 pce.

8. Bande de roulement selon l'une quelconque des revendications 2 à 7, l'élastomère diénique étant un copolymère de butadiène-styrène (SBR), de préférence un SBR préparé en solution.

9. Bande de roulement selon la revendication 8, l'élastomère SBR ayant une teneur en styrène comprise entre 20% et 30% en poids, une teneur en liaisons vinyliques de la partie butadiénique comprise entre 15% et 65%, une teneur en liaisons trans-1,4 comprise entre 20% et 75% et une température de transition vitreuse comprise entre -20°C et -55°C.

10. Bande de roulement selon les revendications 8 ou 9, le SBR étant utilisé en mélange avec un polybutadiène, le polybutadiène possédant de préférence plus de 90% de liaisons cis-1,4.

11. Bande de roulement selon l'une quelconque des revendications 1 à 10, la charge inorganique renforçante étant utilisée en mélange avec du noir de carbone présent à un taux inférieur à 20 pce, de préférence compris entre 2 et 15 pce.

12. Bande de roulement selon l'une quelconque des revendications 1 à 11, **caractérisée en ce qu'**elle est formée d'au moins deux compositions de caoutchouc différentes radialement superposées, la composition de caoutchouc comportant le composé bismaléimide formant la partie radialement externe de cette bande de roulement.

13. Bande de roulement selon l'une quelconque des revendications 1 à 11, **caractérisée en ce qu'**elle est formée d'au moins deux compositions de caoutchouc différentes radialement superposées, la composition de caoutchouc comportant le composé bismaléimide formant la partie radialement interne de cette bande de roulement.

14. Bande de roulement selon l'une quelconque des revendications 1 à 13, **caractérisée en ce qu'**elle se trouve à l'état vulcanisé.

15. Utilisation d'une bande de roulement selon l'une quelconque des revendications 1 à 14, pour la fabrication de pneumatiques neufs ou le rechapage de pneumatiques usagés.

16. Procédé pour préparer une bande de roulement de pneumatique présentant, après cuisson et rodage mécanique du pneumatique la comportant, un gradient de rigidité radialement croissant de la surface vers l'intérieur de la bande de roulement, **caractérisé en ce qu'**il comporte les étapes suivantes :
- incorporer à un élastomère diénique, dans un mélangeur, au cours d'une première étape dite "non-productive" :
• plus de 60 pce d'une charge inorganique renforçante ;
• entre 2 et 15 pce d'un agent de couplage;
• entre 4 et 12 pce d'un composé bismaléimide,
en malaxant thermomécaniquement le tout, en une ou plusieurs fois, jusqu'à atteindre une température maximale comprise entre 130°C et 200°C ;
- refroidir l'ensemble à une température inférieure à 100°C;
- incorporer ensuite, au cours d'une seconde étape dite "productive" :
• un système de vulcanisation ;
- malaxer le tout jusqu'à une température maximale inférieure à 120°C ;
- extruder ou calandrer la composition de caoutchouc ainsi obtenue, sous la forme d'une bande de roulement de pneumatique.

17. Procédé selon la revendication 16, l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

18. Procédé selon les revendications 17 ou 18, la charge inorganique renforçante étant une charge siliceuse ou alumineuse, de préférence de la silice.

19. Procédé selon l'une quelconque des revendications 16 à 18, la quantité de charge inorganique renforçante étant supérieure à 70 pce, de préférence comprise entre 70 et 120 pce.

20. Procédé selon l'une quelconque des revendications 16 à 19, le composé bismaléimide étant la N,N'-(m-phénylène)-bismaléimide ou la N,N'-(4,4'-diphénylméthane)-bismaléimide.

21. Procédé selon la revendication 20, le composé bismaléimide étant la N,N'-(4,4-diphénylméthane)-bismaléimide.

22. Procédé selon l'une quelconque des revendications 16 à 21, le taux de composé bismaléimide étant compris dans un domaine de 5 à 10 pce.

23. Pneumatique comportant une bande de roulement conforme à l'une quelconque des revendications 1 à 14.

24. Pneumatique selon la revendication 23 consistant en un pneumatique tourisme, **caractérisé en ce que** sa bande de roulement présente, après vulcanisation et rodage mécanique du pneumatique, un gradient de rigidité radialement croissant de la surface vers l'intérieur de la bande de roulement, le module MA10 (module sécant à 10% d'allongement) de ladite bande de roulement étant en surface compris entre 2 et 8 MPa, dans sa partie radialement la plus interne compris entre 8 et 16 MPa.

25. Pneumatique selon la revendication 24 consistant en un pneumatique tourisme été, le module MA10 de la bande de roulement étant en surface compris entre 5 et 8 MPa, dans sa partie radialement la plus interne compris entre 8 et 14 MPa.

26. Pneumatique selon la revendication 24 consistant en un pneumatique tourisme hiver, le module MA10 de la bande de roulement étant en surface compris entre 3 et 6 MPa, dans sa partie radialement la plus interne compris entre 6 et 12 MPa.

## Claims

1. A tyre tread comprising a rubber composition based on at least (phr = parts by weight per hundred parts of diene elastomer):
- (i) a diene elastomer;
- (ii) more than 60 phr of a reinforcing inorganic filler;
- (iii) between 2 and 15 phr of a coupling agent;
- (iv) between 4 and 12 phr of a bismaleimide compound.

2. A tread according to Claim 1, the diene elastomer being selected from the group which consists of polybutadienes, synthetic polyisoprenes, natural rubber, butadiene copolymers, isoprene copolymers and mixtures of these elastomers.

3. A tread according to Claims 1 or 2, the reinforcing inorganic filler being a siliceous or aluminous filler, preferably silica.

4. A tread according to any one of Claims 1 to 3, the quantity of reinforcing inorganic filler being greater than 70 phr, preferably between 70 and 120 phr.

5. A tread according to any one of Claims 1 to 4, the bismaleimide compound being N,N'-(m-phenylene)-bismaleimide or N,N'-(4,4'-diphenylmethane)-bismaleimide.

6. A tread according to Claim 5, the bismaleimide compound being N,N'-(4,4-diphenylmethane)-bismaleimide.

7. A tread according to any one of Claims 1 to 6, the amount of bismaleimide compound being within a range from 5 to 10 phr.

8. A tread according to any one of Claims 2 to 7, the diene elastomer being a butadiene/styrene copolymer (SBR), preferably an SBR prepared in solution.

9. A tread according to Claim 8, the SBR elastomer having a styrene content of between 20% and 30% by weight, a content of vinyl bonds of the butadiene fraction of between 15% and 65%, a content of trans-1,4 bonds of between 20% and 75% and a glass transition temperature of between -20°C and -55°C.

10. A tread according to Claims 8 or 9, the SBR being used in a mixture with a polybutadiene, the polybutadiene preferably having more than 90% cis-1,4 bonds.

11. A tread according to any one of Claims 1 to 10, the reinforcing inorganic filler being used in a mixture with carbon black present in an amount less than 20 phr, preferably between 2 and 15 phr.

12. A tread according to any one of Claims 1 to 11, **characterised in that** it is formed of at least two different, radially superposed, rubber compositions, the rubber composition comprising the bismaleimide compound forming the radially outer part of this tread.

13. A tread according to any one of Claims 1 to 11, **characterised in that** it is formed of at least two different, radially superposed, rubber compositions, the rubber composition comprising the bismaleimide compound forming the radially inner part of this tread.

14. A tread according to any one of Claims 1 to 13, **characterised in that** it is in the vulcanised state.

15. The use of a tread according to any one of Claims 1 to 14 for the manufacture of new tyres or the recapping of worn tyres.

16. A process for preparing a tyre tread having, after curing and mechanical running-in of the tyre comprising it, a rigidity gradient which increases radially from the surface towards the inside of the tread, **characterised in that** it comprises the following steps:
- incorporating in a diene elastomer, in a mixer, during a first step referred to as "non-productive" :
• more than 60 phr of a reinforcing inorganic filler;
• between 2 and 15 phr of a coupling agent;
• between 4 and 12 phr of a bismaleimide compound,
thermomechanically kneading the entire mixture, in one or more stages, until a maximum temperature of between 130°C and 200°C is reached;
- cooling the entire mixture to a temperature of less than 100°C;
- then incorporating, during a second step referred to as "productive":
• a vulcanisation system;
- kneading the entire mixture until a maximum temperature less than 120°C is reached;
- extruding or calendering the rubber composition thus obtained, in the form of a tyre tread.

17. A process according to Claim 16, the diene elastomer being selected from among the group consisting of polybutadienes, synthetic polyisoprenes, natural rubber, butadiene copolymers, isoprene copolymers and mixtures of these elastomers.

18. A process according to Claims 17 or 18, the reinforcing inorganic filler being a siliceous or aluminous filler, preferably silica.

19. A process according to any one of Claims 16 to 18, the quantity of reinforcing inorganic filler being greater than 70 phr, preferably of between 70 and 120 phr.

20. A process according to any one of Claims 16 to 19, the bismaleimide compound being N,N'-(m-phenylene)-bismaleimide or N,N'-(4,4'-diphenylmethane)-bismaleimide.

21. A process according to Claim 20, the bismaleimide compound being N,N'-(4,4-diphenylmethane)-bismaleimide.

22. A process according to any one of Claims 16 to 21, the amount of bismaleimide compound being within a range from 5 to 10 phr.

23. A tyre comprising a tread according to any one of Claims 1 to 14.

24. A tyre according to Claim 23, consisting of a passenger-car tyre, **characterised in that** its tread has, after vulcanisation and mechanical running-in of the tyre, a rigidity gradient which increases radially from the surface towards the inside of the tread, the modulus ME10 (secant modulus at 10% elongation) of said tread being of between 2 and 8 MPa at the surface, and of between 8 and 16 MPa in its radially innermost part.

25. A tyre according to Claim 24, consisting of a summer passenger-car tyre, the modulus ME10 of the tread being of between 5 and 8 MPa at the surface, and of between 8 and 14 MPa in its radially innermost part.

26. A tyre according to Claim 24, consisting of a winter passenger-car tyre, the modulus ME10 of the tread being of between 3 and 6 MPa at the surface, and of between 6 and 12 MPa in its radially innermost part.

## Patentansprüche

1. Reifenlauffläche, umfassend eine Kautschukzusammensetzung auf Basis von mindestens (phr = Gewichtsteile pro hundert Teile Elastomer):
- (i) einem Dienelastomer;
- (ii) mehr als 60 phr eines verstärkenden anorganischen Füllstoffs;
- (iii) zwischen 2 und 15 phr eines Kupplungsmittels;
- (iv) zwischen 4 und 12 phr einer Bismaleinimidverbindung.

2. Lauffläche nach Anspruch 1, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

3. Lauffläche nach Anspruch 1 oder 2, wobei es sich bei dem verstärkenden anorganischen Füllstoff um einen silicium- oder aluminiumhaltigen Füllstoff, vorzugsweise Siliciumdioxid, handelt.

4. Lauffläche nach einem der Ansprüche 1 bis 3, wobei die Menge an verstärkendem anorganischem Füllstoff über 70 phr und vorzugsweise zwischen 70 und 120 phr liegt.

5. Lauffläche nach einem der Ansprüche 1 bis 4, wobei es sich bei der Bismaleinimidverbindung um N,N'-(m-Phenylen)bismaleinimid oder N,N'-(4,4'-Diphenylmethan)bismaleinimid handelt.

6. Lauffläche nach Anspruch 5, wobei es sich bei der Bismaleinimidverbindung um N,N'-(4,4'-Diphenylmethan)bismaleinimid handelt.

7. Lauffläche nach einem der Ansprüche 1 bis 6, wobei der Gehalt an Bismaleinimidverbindung im Bereich von 5 bis 10 phr liegt.

8. Lauffläche nach einem der Ansprüche 2 bis 7, wobei es sich bei dem Dienelastomer um ein Butadien-Styrol-Copolymer (SBR), vorzugsweise ein in Lösung hergestelltes SBR, handelt.

9. Lauffläche nach Anspruch 8, wobei das SBR-Elastomer einen Styrolgehalt zwischen 20 und 30 Gew.-%, einen Gehalt an Vinylbindungen im Butadienteil zwischen 15 und 65%, einen Gehalt an trans-1,4-Bindungen zwischen 20 und 75% und eine Glasübergangstemperatur zwischen -20°C und -55°C aufweist.

10. Lauffläche nach Anspruch 8 oder 9, wobei das SBR in Abmischung mit einem Polybutadien mit vorzugsweise mehr als 90% cis-1,4-Bindungen verwendet wird.

11. Lauffläche nach einem der Ansprüche 1 bis 10, wobei der verstärkende anorganische Füllstoff in Abmischung mit Ruß in einem Gehalt von weniger als 20 phr, vorzugsweise zwischen 2 und 15 phr, verwendet wird.

12. Lauffläche nach einem der Ansprüche 1 bis 11, **dadurch gekennzeichnet, daß** sie aus mindestens zwei verschiedenen radial übereinanderliegenden Kautschukzusammensetzungen gebildet ist, wobei die die Bismaleinimidverbindung enthaltende Kautschukzusammensetzung den radial äußeren Teil dieser Lauffläche bildet.

13. Lauffläche nach einem der Ansprüche 1 bis 11, **dadurch gekennzeichnet, daß** sie aus mindestens zwei verschiedenen radial übereinanderliegenden Kautschukzusammensetzungen gebildet ist, wobei die die Bismaleinimidverbindung enthaltende Kautschukzusammensetzung den radial inneren Teil dieser Lauffläche bildet.

14. Lauffläche nach einem der Ansprüche 1 bis 13, **dadurch gekennzeichnet, daß** sie in vulkanisiertem Zustand vorliegt.

15. Verwendung einer Lauffläche nach einem der Ansprüche 1 bis 14 zur Herstellung von Neureifen oder zur Runderneuerung von Altreifen.

16. Verfahren zur Herstellung einer Reifenlauffläche, die nach Härtung und mechanischem Einfahren des sie enthaltenden Reifens einen von der Oberfläche zum Inneren der Lauffläche radial zunehmenden Steifigkeitsgradienten aufweist, **dadurch gekennzeichnet, daß** man:
- im Lauf eines ersten, als "nichtproduktiv" bezeichneten Schritts in einem Mischer
· mehr als 60 phr eines verstärkenden anorganischen Füllstoffs;
zwischen 2 und 15 phr eines Kupplungsmittels und
· zwischen 4 und 12 phr einer Bismaleinimidverbindung
in ein Dienelastomer einarbeitet, indem man das Ganze ein- oder mehrmals thermomechanisch knetet, bis eine Höchsttemperatur zwischen 130°C und 200°C erreicht ist;
- das Ganze auf eine Temperatur von weniger als 100°C abkühlt;
- dann im Lauf eines zweiten, als "produktiv" bezeichneten Schritts
ein Vulkanisationssystem einarbeitet;
- das Ganze bis zu einer Höchsttemperatur von weniger als 120°C knetet und
- die so erhaltene Kautschukzusammensetzung in Form einer Reifenlauffläche extrudiert oder kalandriert.

17. Verfahren nach Anspruch 16, wobei man das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere auswählt.

18. Verfahren nach Anspruch 17 oder 18, wobei es sich bei dem verstärkenden anorganischen Füllstoff um einen silicium- oder aluminiumhaltigen Füllstoff, vorzugsweise Siliciumdioxid, handelt.

19. Verfahren nach einem der Ansprüche 16 bis 18, wobei die Menge an verstärkendem anorganischem Füllstoff über 70 phr und vorzugsweise zwischen 70 und 120 phr liegt.

20. Verfahren nach einem der Ansprüche 16 bis 19, wobei es sich bei der Bismaleinimidverbindung um N,N'-(m-Phenylen)bismaleinimid oder N,N'-(4,4'-Diphenylmethan)bismaleinimid handelt.

21. Verfahren nach Anspruch 20, wobei es sich bei der Bismaleinimidverbindung um N,N'-(4,4'-Diphenylmethan)bismaleinimid handelt.

22. Verfahren nach einem der Ansprüche 16 bis 21, wobei der Gehalt an Bismaleinimidverbindung im Bereich von 5 bis 10 phr liegt.

23. Reifen mit einer Lauffläche gemäß einem der Ansprüche 1 bis 14.

24. Reifen nach Anspruch 23, bei dem es sich um einen Pkw-Reifen handelt, **dadurch gekennzeichnet, daß** die Lauffläche des Reifens nach Vulkanisation und mechanischem Einfahren des Reifens einen von der Oberfläche zum Inneren der Lauffläche radial zunehmenden Steifigkeitsgradienten aufweist, wobei der MA10-Modul (Sekantenmodul bei 10% Dehnung) der Lauffläche an der Oberfläche zwischen 2 und 8 MPa und im radial innersten Teil zwischen 8 und 16 MPa liegt.

25. Reifen nach Anspruch 24, bei dem es sich um einen Pkw-Sommerreifen handelt, wobei der MA10-Modul der Lauffläche an der Oberfläche zwischen 5 und 8 MPa und im radial innersten Teil zwischen 8 und 14 MPa liegt.

26. Reifen nach Anspruch 24, bei dem es sich um einen Pkw-Winterreifen handelt, wobei der MA10-Modul der Lauffläche an der Oberfläche zwischen 3 und 6 MPa und im radial innersten Teil zwischen 6 und 12 MPa liegt.
